# EUROPEAN PATENT APPLICATION

(11) **EP 4 645 044 A1**
(43) Date of publication of application: **05.11.2025**
(21) Application number: 25173848.0
(22) Date of filing: 01.05.2025
(51) Int. Cl.: G06F 3/041

(54) **SYSTEM AND METHOD FOR NEURAL NETWORK BASED TOUCH CLASSIFICATION IN A TOUCH SENSOR**

(30) Priority: 02.05.2024 US 202418653859
(71) Applicant: Synaptics Incorporated, San Jose, CA 95131 (US)
(72) Inventor: SHANMUGA VADIVEL, Karthikeyan, San Jose, 95131 (US); SHEIK-NAINAR, Mohamed, San Jose, 95131 (US); YANG, Ting-Jan, San Jose, 95131 (US); CHIEN, Chun-Liang, San Jose, 95131 (US)
(74) Representative: J A Kemp LLP

(57) **Abstract**

An input device for classification of an input object is provided. The input device comprises a touch sensor comprising a plurality of sensor electrodes configured to obtain touch data; and a processing system. The processing system is configured to receive touch data from resulting signals from the plurality of sensor electrodes; generate a touch image based on the touch data; generate one or more contact images based on the touch image, each contact image comprising one or more first pixels from the touch image and one or more second pixels with predefined values; classify, using a neural network, a respective contact in each of the one or more contact images and generate corresponding classification results; and identify, based on the classification results, one or more classified contacts in the touch image.

## Description

### FIELD

The disclosed embodiments relate generally to electronic devices, and more particularly, to classification of different types of contacts in a touch sensor.

### BACKGROUND

Input devices including touch sensor devices (e.g., touchpad sensors, touch screen displays, etc.) are used in a variety of electronic systems. Touch sensor devices typically include a sensing region, often demarked by a surface, in which the touch sensor device determines position information (e.g., the presence, location, and/or motion) of one or more input objects, typically for purposes allowing a user to provide user input to interact with the electronic system.

Touch sensor devices, such as touchpads, are typically operated using finger and thumb interactions. However, due to the placement of the touchpad (directly under keyboard), it is common for users to unintentionally contact the touchpad with, for example, their palm while interacting with keyboard. This issue is further exacerbated by more recent iterations of touchpad designs where the size of the touch region is considerably larger. Additionally, with the introduction of additional features, users are increasingly using thumbs to make quick interactions with the touchpad while typing on the keyboard. Hence, there is a need to correctly classify user contacts to enhance user experience.

### SUMMARY

A first aspect of the present disclosure provides an input device for classification of an input object, comprising: a touch sensor comprising a plurality of sensor electrodes configured to obtain touch data; and a processing system configured to: receive touch data from resulting signals from the plurality of sensor electrodes; generate a touch image based on the touch data; generate one or more contact images based on the touch image, each contact image comprising one or more first pixels from the touch image and one or more second pixels with predefined values; classify, using a neural network, a respective contact in each of the one or more contact images and generate corresponding classification results; and identify, based on the classification results, one or more classified contacts in the touch image.

A second aspect of the present disclosure provides a method for classification of an input object using an input device, comprising: receiving, from a plurality of sensor electrodes of the input device, touch data from resulting signals; generating a touch image based on the touch data; generating one or more contact images based on the touch image, each contact image comprising one or more first pixels from the touch image and one or more second pixels with predefined values; classifying, using a neural network, a respective contact in each of the one or more contact images and generating corresponding classification results; and identifying, based on the classification results, one or more classified contacts in the touch image.

A third aspect of the present disclosure provides non-transitory computer-readable medium, having computer-executable instructions stored thereon for classification of an input object using an input device, wherein the computer-executable instructions, when executed, facilitate performance of the following: receiving, from a plurality of sensor electrodes of the input device, touch data from resulting signals; generating a touch image based on the touch data; generating one or more contact images based on the touch image, each contact image comprising one or more first pixels from the touch image and one or more second pixels with predefined values; classifying, using a neural network, a respective contact in each of the one or more contact images and generating corresponding classification results; and identifying, based on the classification results, one or more classified contacts in the touch image.

### BRIEF DESCRIPTION OF THE DRAWINGS

**FIG. 1** is a block diagram of an example of an input device, in accordance with certain embodiments;
**FIG. 2** is a block diagram of an example of capacitive sensing electrodes and control circuit in accordance with certain embodiments;
**FIG. 3** is a flowchart illustrating an exemplary process of classifying contacts, in accordance with certain embodiments;
**FIG. 4** is a workflow illustrating an exemplary process of classifying contacts from a touch image, in accordance with certain embodiments;
**FIG. 5** is a flowchart illustrating a training process, in accordance with certain embodiments; and
**FIGs. 6A** and **6B** are example classification results using a neural network-based classifier, in accordance with certain embodiments;
**FIG. 7** is a flowchart of determining priority of contacts, in accordance with certain embodiment.

It is contemplated that elements disclosed in one embodiment may be beneficially utilized on other embodiments without specific recitation. The drawings referred to here should not be understood as being drawn to scale unless specifically noted. Also, the drawings may be simplified, with details or components omitted for clarity of presentation and explanation. The drawings and discussion serve to provide examples to explain principles discussed below, where like designations denote like elements, and the drawings should not be interpreted as being limiting based on a specific exemplary depiction.

### DETAILED DESCRIPTION

The following detailed description is merely exemplary in nature and is not intended to limit the disclosure or the application and uses of the disclosure. Furthermore, there is no intention to be bound by any expressed or implied theory presented in the preceding field, background, summary, brief description of the drawings, the following detailed description, or the appended abstract.

The terms "coupled with," along with its derivatives, and "connected to" along with its derivatives, may be used herein, including in the claims. "Coupled" or "connected" may mean one or more of the following: "coupled" or "connected" may mean that two or more elements are in direct physical or electrical contact; "coupled" or "connected" may also mean that two or more elements indirectly connect to each other, e.g., not in physical contact, but yet still cooperate or interact with each other, and may mean that one or more other elements are coupled or connected between the elements that are said to be coupled with or connected to each other.

Example embodiments of the present disclosure accurately, reliably and efficiently classify different types of contacts proximate to a touch sensor of input devices, and thereby improve overall user experience with respect to electronic devices utilizing principles of the present disclosure. The system and method use a pipeline to address touch classification neural networks. For example, in certain implementations, the system and method include a compact neural network that can be implemented even when computational and memory resources are limited, while at the same time offering gains in performance compared to conventional approaches. Embodiments of the system and method utilize novel data pre-processing and augmentation techniques to ensure that the neural network can function effectively for touchpad edge and multi-contact scenarios. The system and method provide accurate and efficient classification even in areas of the touch sensor edges and corners where only partial touch data is available thereby increasing the active usable area of the touchpad. A non-limiting example of processes in which the system and method may be employed including Accidental Contact Mitigation ("ACM").

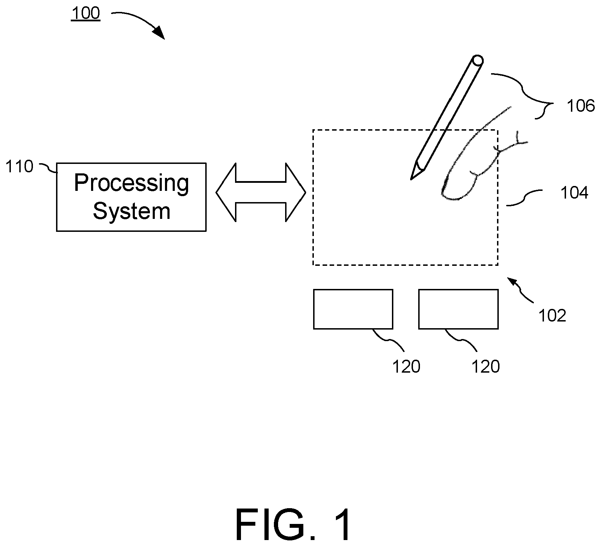

**FIG. 1** is a block diagram of an exemplary input device 100. The input device 100 may be configured to provide input to an electronic system. As used in this document, the term "electronic system" (or "electronic device") broadly refers to any system capable of electronically processing information. Some non-limiting examples of electronic systems include personal computers of all sizes and shapes, such as desktop computers, laptop computers, netbook computers, tablets-including foldable tablets, web browsers, e-book readers, personal digital assistants (PDAs), and wearable computers (such as smart watches and activity tracker devices). Additional examples of electronic systems include composite input devices, such as physical keyboards that include input device 100 and separate joysticks or key switches. Further examples of electronic systems include peripherals such as data input devices (including remote controls and mice), and data output devices (including display screens and printers). Other examples include remote terminals, kiosks, and video game machines (e.g., video game consoles, portable gaming devices, and the like). Other examples include communication devices (including cellular phones, such as smart phones-including foldable and rollable smart phones), media devices (including recorders, editors, and players such as televisions, set-top boxes, music players, digital photo frames, and digital cameras), automotive multimedia information systems, and internet of things (IoT) devices, among others. Additionally, the electronic system could be a host or a slave to the input device.

The input device 100 can be implemented as a physical part of the electronic system, or can be physically separate from the electronic system. As appropriate, the input device 100 may communicate with parts of the electronic system using any one or more of the following: buses, networks, and other wired or wireless interconnections. Examples include I2C, SPI, PS/2, Universal Serial Bus (USB), Bluetooth, RF, and IRDA.

In **FIG. 1****,** a touch sensor 102 is included with the input device 100. The touch sensor 102 comprises one or more sensing elements configured to sense input provided by one or more input objects 106 in a sensing region 104. Examples of input objects include styli, fingers, and other parts of the hand such as a thumb or palm. Sensing region 104 encompasses any space above, around, in and/or near the touch sensor 102 in which the input device 100 is able to detect user input (e.g., user input provided by one or more input objects). The sizes, shapes, and locations of particular sensing regions may vary from embodiment to embodiment. In some embodiments, the sensing region 104 extends from a surface of the input device 100 in one or more directions into space until signal-to-noise ratios prevent sufficiently accurate object detection. The distance to which this sensing region 104 extends in a particular direction, in some embodiments, may be on the order of less than a millimeter, millimeters, centimeters, or more, and may vary significantly with the type of sensing technology used and the accuracy desired. Thus, some embodiments sense input that comprises no contact with any surfaces of the input device 100, contact with an input surface (e.g., a touch surface) of the input device 100, contact with an input surface of the input device 100 in combination with some amount of applied force or pressure, and/or a combination thereof. In some embodiments, input surfaces may be provided by surfaces of sensor substrates within which or on which sensor elements are positioned, or by face sheets or other cover layers positioned over sensor elements.

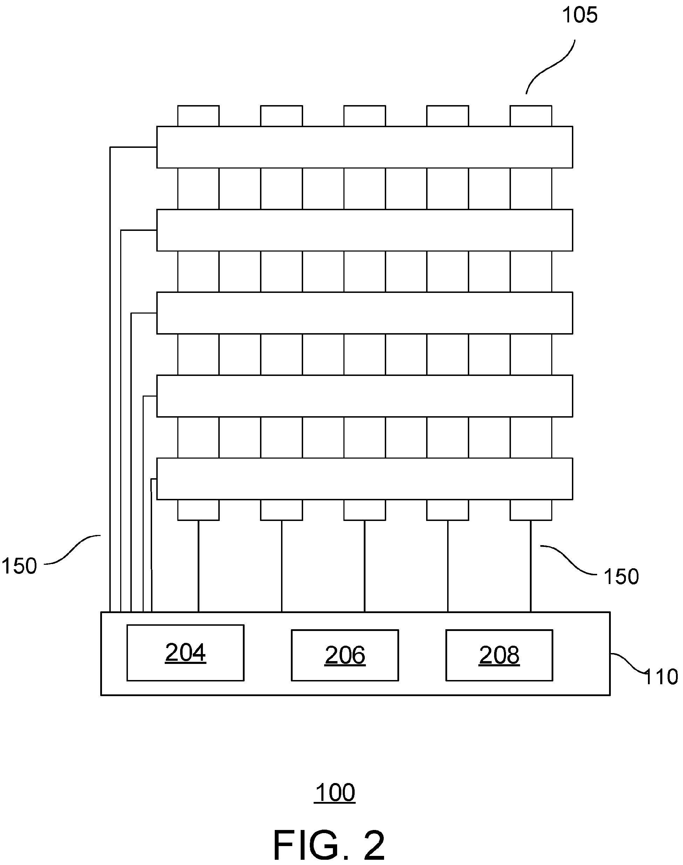

The input device 100 may utilize any suitable combination of sensor components and sensing technologies to detect user input in the sensing region 104. Some implementations utilize arrays or other regular or irregular patterns of multiple sensing elements to detect the input. Exemplary sensing techniques that the input device 100 may use include capacitive sensing techniques, optical sensing techniques, acoustic (e.g., ultrasonic) sensing techniques, pressurebased (e.g., piezoelectric) sensing techniques, resistive sensing techniques, thermal sensing techniques, inductive sensing techniques, elastive sensing techniques, magnetic sensing techniques, and/or radar sensing techniques. The input device 100, for example, includes a touch sensor 102 that uses capacitive techniques where a voltage or current, referred to as a sensing signal, is applied to create an electric field. Nearby input objects cause changes in the electric field, and produce detectable changes in capacitive coupling that may be detected as changes in voltage, current, or the like referred to as a resulting signal. The sensor 102 includes, for example, sensor electrodes 105 (**FIG. 2**), which are utilized as capacitive sensing elements.

The input device 100 includes a processing system 110. The processing system 110 comprises parts of or all of one or more integrated circuits (ICs) and/or other circuitry components. The processing system 110 is coupled to (or configured to couple to) the touch sensor 102, and is configured to detect input in the sensing region 104 using sensing hardware of the touch sensor 102. In some embodiments, the processing system 110 includes electronically-readable instructions, such as firmware code, software code, and/or the like. The processing system 110 can be implemented as a physical part of the sensor 102, or can be physically separate from the sensor 102. Constituent components of the processing system 110 may be located together, or may be located physically separate from each other. For example, the input device 100 may be a peripheral coupled to a computing device, and the processing system 110 may comprise software configured to run on a central processing unit of the computing device and one or more ICs with associated firmware separate from the central processing unit (CPU). As another example, the input device 100 may be physically integrated in a mobile device, and the processing system 110 may comprise circuits and firmware that are part of a main processor of the mobile device. The processing system 110 may be dedicated to implementing the input device 100, or may perform other functions, such as operating display screens, driving haptic actuators, etc.

The processing system 110 may operate the sensing element(s) of the input device 100 to produce electrical signals indicative of input (or lack of input) in the sensing region 104. The processing system 110 may perform any appropriate amount of processing on the electrical signals in producing the information provided to the electronic system. For example, the processing system 110 may digitize analog electrical signals obtained from the sensor electrodes. As another example, the processing system 110 may perform filtering or other signal conditioning. As yet another example, the processing system 110 may subtract or otherwise account for a baseline, such that the information reflects a difference between the electrical signals and the baseline. As yet further examples, the processing system 110 may determine positional information, recognize inputs as commands, recognize handwriting, match biometric samples, and the like.

The touch sensor 102 is configured to detect position information of an input object 106 within the sensing region 104. The sensing region 104 may include an input surface having a larger area than the input object. The touch sensor 102 may include an array of sensing elements, such as capacitive sensing elements, with a resolution configured to detect a location of a touch to the input surface. In some embodiments, a pitch of the touch sensing elements or a spacing between an adjacent pair of the touch sensing elements is between 2 and 6 mm, although it will be appreciated that other geometries may be suitable depending, for example, on desired resolution.

In some embodiments, the input device 100 is implemented with additional input components that are operated by the processing system 110 or by some other processing system. These additional input components may provide redundant functionality for input in the sensing region 104, or some other functionality. **FIG. 1** shows buttons 120 near the sensing region 104 that can be used to facilitate selection of items using the input device 100. Other types of additional input components include sliders, balls, wheels, switches, and the like. Conversely, in some embodiments, the input device 100 may be implemented with no other input components.

Referring to **FIG. 2****,** the input device 100 includes, in certain embodiments, sensor electrodes 105 to facilitate capacitive touch sensing. The sensor electrodes 105 are coupled to the processing system 110 via traces 150. The exemplary pattern of the sensor electrodes 105 illustrated in **FIG. 2** comprises an array of sensor electrodes 105 disposed in a plurality of rows and columns. It is contemplated that the sensor electrodes 105 may be arranged in other patterns, such as polar arrays, repeating patterns, non-repeating patterns, non-uniform arrays, or other suitable arrangement. The sensor electrodes 105 may have a shape that is circular, rectangular, diamond, star, square, nonconvex, convex, nonconcave, concave, or other suitable geometry.

The sensor electrodes 105 may be disposed in one or more layers. For example, a portion of the sensor electrodes 105 may be disposed on a first layer and another portion of the sensor electrodes may be disposed on a second layer. The first and second layers may be different sides of a common substrate, or different substrates. Alternatively, the sensor electrodes 105 may be disposed in a common layer.

The sensor electrodes 105 may be comprised of a conductive material such as a metal mesh, indium tin oxide (ITO), or the like. Further, the sensor electrodes 105 are ohmically isolated from each other. That is, one or more insulators separate the sensor electrodes and prevent them from electrically shorting to each other.

The processing system 110 includes a sensor driver 204. Further, as will be described in more detail below, the processing system 110 may include a determination module 206. The processing system 110 operates the sensor electrodes 105 to detect one or more input objects (e.g., the input objects 106 as shown in **FIG. 1**) in the sensing region 104 of the input device 100. The processing system 110 fully or partially resides in one or more integrated circuit (IC) chips. For example, the processing system 110 may reside in a single IC chip. Alternatively, the processing system 110 may include multiple IC chips. The sensor driver 204 is coupled to the sensor electrodes 105 via the routing traces 150 and is configured to drive the sensor electrodes 105 with sensing signals to detect one or more input objects 106 in the sensing region 104 of the input device 100.

In certain embodiments, the touch sensor 102 may be integrated in a display. In such embodiments, the processing system may include a display driver, which may be a separate circuity or be integrated into the processing system 110.

The sensor driver 204 includes digital and/or analog circuitry. For example, the sensor driver 204 comprises transmitter (or driver) circuitry to drive sensing signals onto the sensor electrodes 105 and receiver circuitry to receive resulting signals from the sensor electrodes 105. The transmitter circuitry may include one or more amplifiers and/or one or more modulators to drive sensing signals on to the sensor electrodes 105. The receiver circuitry may include integrators, filters, sample and hold circuitry, and analog-to-digital converters (ADCs), among others, to receive resulting signals from the sensor electrodes 105.

In one embodiment, the sensor driver 204 drives a first one or more of the sensor electrodes 105 with a transcapacitive sensing signal, and receives a resulting signal with a second one or more of the sensor electrodes 105 to operate the sensor electrodes 105 for transcapacitive sensing. Operating the sensor electrodes 105 for transcapacitive sensing detects changes in capacitive coupling between sensor electrodes driven with a transcapacitive sensing signal and sensor electrodes operated as receiver electrodes. The capacitive coupling may be reduced when an input object (e.g., the input object 106 as shown in **FIG. 1**) approaches the sensor electrodes 105. Driving the sensor electrodes 105 with transcapacitive sensing signals comprises modulating the sensor electrodes 105 relative to a reference voltage, e.g., system ground.

The transcapacitive sensing signal is a periodic or aperiodic signal that varies between two or more voltages. In some embodiments, the transcapacitive sensing signal has a frequency between 100 kHz and 1 MHz. In other embodiments, other frequencies may be utilized. In one embodiment, the transcapacitive sensing signal has a peak-to-peak amplitude in a range of about 1 V to about 10 V. However, in other embodiments, the transcapacitive sensing signal has other peak-to-peak amplitudes. Additionally, the transcapacitive sensing signal may have a square waveform, a sinusoidal waveform, a triangular waveform, a trapezoidal waveform (e.g., a quadrature trapezoidal waveform or the like), or a sawtooth waveform, among others.

In some embodiments, operating the sensor electrodes 105 to receive resulting signals comprises holding the sensor electrodes 105 at a substantially constant voltage or modulating the sensor electrodes 105 relative to the transcapacitive sensing signal. A resulting signal includes effect(s) corresponding to one or more transcapacitive sensing signals, and/or to one or more sources of environmental interference, e.g., other electromagnetic signals.

In one embodiment, the sensor driver 204 operates the sensor electrodes 105 for absolute capacitive sensing by driving a first one or more of the sensor electrodes 105 with an absolute capacitive sensing signal and receiving a resulting signal with the driven sensor electrode or electrodes. Operating the sensor electrodes 105 for absolute capacitive sensing detects changes in capacitive coupling between sensor electrodes driven with an absolute capacitive sensing signal and an input object (e.g., the input object 106). The capacitive coupling of the sensor electrodes 105 driven with the absolute capacitive sensing signal is altered in response to an input object (e.g., the input object 106) interacting with the sensor electrodes.

The absolute capacitive sensing signal is a periodic or aperiodic signal that varies between two or more voltages. Further, in some embodiments, the absolute capacitive sensing signal has a frequency between 100 kHz and 1 MHz. In other embodiments, other frequencies may be utilized. Additionally, the absolute capacitive sensing signal has a square waveform, a sinusoidal waveform, a triangular waveform, a trapezoidal waveform (e.g., a quadrature trapezoidal waveform or the like), or a sawtooth waveform, among others. In one embodiment, the absolute capacitive sensing signal has a peak-to-peak amplitude in a range of about 1 V to about 10 V. However, in other embodiments, the absolute capacitive sensing signal has other peak-to-peak amplitudes.

Driving the sensor electrodes 105 with an absolute capacitive sensing signal comprises modulating the sensor electrodes 105. A resulting signal received while performing absolute capacitive sensing comprises effect(s) corresponding to one or more absolute capacitive sensing signals, and/or one or more sources of environmental interference, e.g., other electromagnetic signals. As will be described in greater detail below, a source of environmental interference may be display update signals driven by display electrodes of a display device. The absolute capacitive sensing signal may be the same or different from the transcapacitive sensing signal.

The processing system 110 further includes a determination module 206 that receives processed resulting signals from the sensor driver 204 and further processes the processed resulting signals to determine changes in capacitive coupling of the sensor electrodes 105. The changes in capacitive coupling are changes in absolute capacitive coupling of the sensor electrodes 105 and/or changes in transcapacitive coupling between the sensor electrodes 105. The determination module 206 utilizes the changes in capacitive coupling of the sensor electrodes 105 to determine positional information of one or more input objects (e.g., the input object 106) relative to the sensor electrodes 105.

The measurements of the changes in capacitive coupling are utilized by the determination module 206 to form a capacitive image. The resulting signals utilized to detect the changes in capacitive coupling are received during a capacitive frame. A capacitive frame may correspond to one or more capacitive images. Multiple capacitive images may be acquired over multiple time periods, and differences between the images are used to derive information about an input object 106 in the sensing region 104 of the input device 100. For example, successive capacitive images acquired over successive periods of time can be used to track the motion(s) of one or more input objects entering, exiting, and within the sensing region 104 of the input device 100.

"Positional information" as used herein broadly encompasses absolute position, relative position, velocity, acceleration, and other types of spatial information. Exemplary "zerodimensional" positional information includes near/far or contact/no contact information. Exemplary "one-dimensional" positional information includes positions along an axis. Exemplary "two-dimensional" positional information includes motions in a plane. Exemplary "three-dimensional" positional information includes instantaneous or average velocities in space. Further examples include other representations of spatial information. Historical data regarding one or more types of positional information may also be determined and/or stored, including, for example, historical data that tracks position, motion, or instantaneous velocity over time.

The sensor driver 204 is configured to drive the sensor electrodes 105 for capacitive sensing during a capacitive frame at a capacitive frame rate. During each capacitive frame, sensor electrodes 105 are operated for capacitive sensing. Further, each capacitive frame may include multiple periods during which different sensor electrodes 105 are operated for capacitive sensing.

The "capacitive frame rate" is the rate at which successive capacitive images are acquired). In some embodiments, the capacitive frame rate is an integer multiple of the display frame rate. Alternatively, in other embodiments, the capacitive frame rate is a fractional multiple of the display frame rate. Further, the capacitive frame rate may be any fraction or multiple of the display frame rate. In one or more embodiments, the capacitive frame rate may be a rational fraction of the display frame rate (e.g., 1/2, 2/3, 1, 3/2, or 2, among others). The display frame rate may change while the capacitive frame rate remains constant. The display frame rate may remain constant while the capacitive frame rate is increased or decreased. Alternately, the capacitive frame rate may be unsynchronized from the display frame rate or the capacitive frame rate may be a nonrational fraction of the display frame rate to minimize interference "beat frequencies" between the display updating and the input sensing.

In some embodiments, the processing system 110 further includes a classification module 208. The classification module 208 implements one or more classifiers to classify contacts based on the capacitive images from the determination module 206. For example, the processing system 110 may utilize the classification module 208 to classify a contact detected within a capacitive image frame as a finger or palm contact.

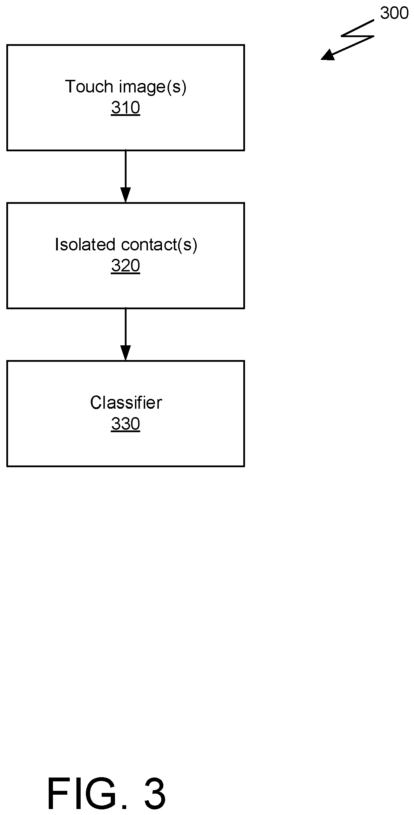

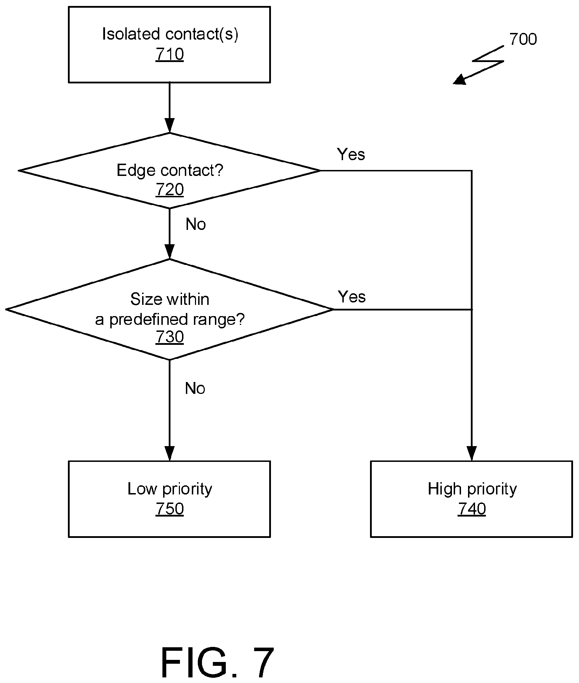

In certain embodiments, the classification module 208 may implement an accidental contact mitigation (ACM) algorithm to distinguish intentional touch inputs from unintended or accidental touches on touch-sensitive devices. For example, the ACM algorithm may involve treating a classified palm touch in certain instances as an accidental contact and therefore disregarding the touch. The ACM algorithm may reduce the occurrence of unintended or false touch inputs on the input device 100, aiming to improve the accuracy and reliability of touch sensing by distinguishing intentional touches from accidental ones. In some embodiment, the classification module 208 may utilize a neural network-based classifier to classify the contacts. This will be further elaborated upon in reference to **FIG. 3****.** In some embodiments, the classification module 208 may employ multiple classifiers to classify the contacts with varying priorities. This will be further explained in reference to **FIG. 7****.**

**FIG. 3** is a flowchart illustrating an exemplary process 300 of classifying various contacts and touches proximate to a sensor, according to certain embodiments of the present disclosure. The contacts may be sensed or detected by the touch sensor 102 of the input device 100. For examples, sensor electrodes 105 in the touch sensor 102 may be driven by the sensor driver 204 (as depicted in **FIG. 2**) to capture frames (e.g., capacitive fames) from some or all of the sensor electrodes 105 periodically and/or during predefined data acquisition time intervals. The frames may be used to form one or more touch image(s) 310. For example, each frame may represent a touch image, or a number of frames (e.g., each capturing a subarray of the sensor electrodes 105) may be merged to form a single frame. In another example, a number of frames (capturing identical or common areas in the array of sensor electrodes 105) may be processed (e.g., applying an integral operation to identical or common pixels) to consolidate into a single frame. It will be understood that other suitable techniques may be employed to obtain a touch image 310 based on the frames from the input device 100.

Process 300 may be performed by the processing system 110 within the input device 100. For example, one or more processors in the processing system 110 may execute computer-executable instructions based on stored firmware and/or software code to carry out some or all of the blocks in process 300 in any suitable order. However, it will be understood that process 300 may be facilitated by various suitable hardware and/or software components.

At block 310, the processing system 110 obtains one or more touch images. As discussed earlier, the processing system may obtain the one or more touch images based on the sensing data provided by the array of sensor electrodes 105 in the input device 100. The touch images may take various forms, such as heat map, density map, contour plot, gradient map, intensity plot, or other suitable forms. Each pixel in the touch image may correspond to the resulting signal received and sensed by one or more electrodes 105 from the array of electrodes 105.

At block 320, the processing system 110 generates isolated contacts based on the one or more touch images. For example, the processing system 110 may identify one or more segmentations (or segments) in a respective touch image based on signal intensity profile. Each segmentation may include a group of pixels encompassing a specific region in the respective touch image. The respective segmentation may be identified when the signal profile within that region indicates a contact falling within that specific area. In some examples, the processing system 110 may first identify one or more first pixels having peak signals or signal intensities above a predefined threshold (e.g., a sensor detection threshold), and then identify one or more second pixels (e.g., neighboring pixels) potentially relevant to the one or more pixels to determine a respective segmentation. In some instances, the processing system 110 may define a corresponding segmentation mask based on the first pixels and the second pixels. A segmentation mask may take various forms to ensure the identification of relevant pixels from the touch image, facilitating the determination of respective segmentation. For example, the segmentation mask may be represented by a binary array, with the value "1" indicating relevant pixels from the touch image to retain and the value "0" indicating irrelevant pixels from the touch image to filter out. In another example, the processing system 110 may assign different values for different segmentation masks. The processing system may determine one or more segmentation masks from each touch image. Each segmentation mask may be associated with a respective identifier or indicated by a corresponding index value, allowing the identification of the respective segmentation mask.

In some variations, two contacts within a touch image may be relatively close to each other, e.g., causing the signal intensity of pixels between them to be influenced by both contacts. In such cases, the processing system 110 may determine that some or all of the pixels between the two contacts belong to both segmentations for the two contacts, respectively. In other words, different segmentations from the same touch image may include common pixels (also referred to as dam pixels) of the touch image. This approach may ensure that most of the information relevant to the current contact is retained by the respective segment while limiting neighboring contact interference.

In a further example, the processing system 110 may identify a pixel with a peak signal intensity among a group of pixels associated with a localized region in the touch sensor 102. To this end, the processing system may set the pixel with the peak signal as the center of a respective segmentation or segmentation mask.

The processing system 110 may generate isolated contact images based on the segmentations / segmentation mask. Each isolated contact image may be set to a fixed size (e.g., with a predefined number of pixels in height and width). In some examples, the processing system may obtain an isolated contact image by using the pixels from a corresponding touch image associated with a corresponding segmentation / segmentation mask to form a center area of the respective isolated contact image. Subsequently, the processing system may generate additional pixels based on default values or other criteria to supplement the remaining area in the respective isolated contact image. This way, the isolated contact images may have centered contacts within the respective images. It will be appreciated that the processing system may construct isolated contact image(s) in other suitable forms, for example with varying sizes, orientations, and / or locations of contacts.

The isolated contact images may include various types of contacts, such as edge contacts and non-edge contacts. For example, a non-edge contact (or a center contact) refers to a contact completely within the region of the touch image, while an edge contact refers to a contact that is partially cut off by at least one edge of the sensing region 104. When generating the additional pixels to form a contact image, the processing system may assign various values to the additional pixels depending on the type of contact in the respective contact image. For instance, the assigned values for the additional pixels may indicate an edge or corner relative to the pixels obtained from the touch image according to the corresponding segmentation / segmentation mask.

In some examples, the one or more touch images in block 310 and/or the isolated contacts in block 320 may be generated through one or more operations within a pipeline executed by the processing system 110.

At block 330, the processing system 110 utilizes a classifier to classify the isolated contacts from block 320.

Various types of neural networks may be utilized for the classification of the isolated contacts (from block 320), such as fully connected (FC) network, convolutional neural network (CNN), recurrent neural network (RNN), and the like.

A neural network (NN) includes multiple layers of interconnected nodes (e.g., perceptrons, neurons, etc.) that can be trained with large amounts of input data to quickly solve complex problems with high accuracy. The first layer in the neural network, which receives input to the neural network, is referred to as the input layer. The last layer in the neural network, which produces outputs of the neural network, is referred to as the output layer. Any layer between the input layer and the output layer of the neural network is referred to as the hidden layer. The various layers in the neural network may be trained to break down the input (e.g., an isolated contact image or a touch image) into multiple sections and learn the correlation between the sections, thus allowing the model to identify/classify the signals of interest (e.g., specific contacts). The parameters/weights related to the neural network may be stored in a non-transitory computer-readable medium (e.g., a memory) in the form of a data structure, which may be executable by a processor(s) (e.g., in the processing system 110) to facilitate the operation of the neural network.

A fully connected (FC) network, also known as a dense or feedforward neural network, is a type of artificial neural network where each neuron in one layer is connected to every neuron in the next layer. In a fully connected network, the input data is passed through all neurons in the multiple layers. In each layer, every neuron is connected to every neuron in the preceding and succeeding layers, thus forming a fully connected topology. Each layer applies a linear transformation to the input data followed by a non-linear activation function, based on information from all neurons in the respective layer. This process allows the network to learn complex patterns and relationships in the data.

A convolutional neural network (CNN) is a neural network architecture for processing grid-like data, such as images. CNNs consist of multiple layers, including convolutional layers, pooling layers, and fully connected layers. For example, in CNNs, convolutional layers apply convolution operations to the input data, extracting features through the use of filters or kernels. Pooling layers then downsample feature maps produced by the convolutional layers to reduce their dimensionality. Finally, fully connected layers may be used at the end of the network to perform classification or regression based on the extracted features.

A recurrent neural network (RNN) is a type of artificial neural network designed to effectively handle sequential data. Unlike feedforward neural networks, an RNN introduces recurrent connections that allow information to persist over time. In an RNN, each neuron is not only connected to neurons in the next layer, but also to itself in a previous time step, creating a loop-like structure. This enables the network to retain memory of past inputs and learn temporal dependencies in the data. At each time step, the input data is processed along with the information from the previous time step, allowing the network to make predictions or generate outputs based on the sequential nature of the data. RNNs may be used for tasks such as predicting the trace / trajectory of contacts, where the order of the data is crucial for understanding its meaning.

The processing system 110 may apply a trained neural network (e.g., a FC network, a CNN, or an RNN) to process the isolated contact image(s) to classify the one or more contacts. The processing system may process the isolated contact images sequentially, in parallel, or a combination thereof. For example, the processing system may include a plurality of processors operating in parallel, where each processor may apply the neural network to classify an isolated contact image at a time.

In some embodiments, the processing system 110 may obtained one or more classified contacts within a touch image or across a sequence of touch images (in block 310), based on the classification results (e.g., from block 330). In this way, the processing system 110 may correctly classify the user touches, such as swipe, flick, tap, among others, based on the touch image(s) containing the classified contact(s). As such, the NN-based classifier provided in the present disclosure may be integrated into an accidental contact mitigation (ACM) algorithm within a pipeline operated in the processing system 110 to enhance its performance.

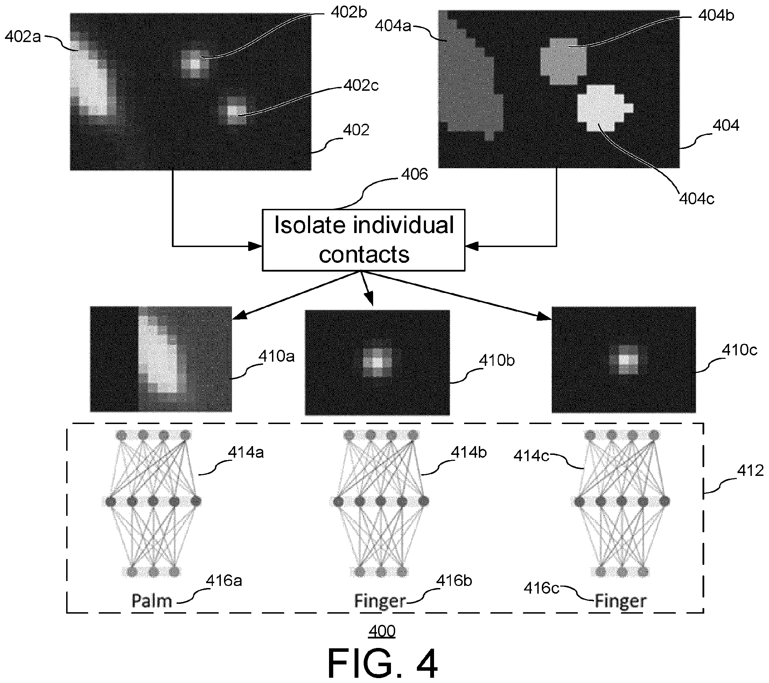

**FIG.** 4 is a workflow illustrating an exemplary process of classifying contacts from a touch image, according to certain embodiments of the present disclosure. A processing system 110 within an input device 100 may be utilized to carry out workflow 400 to process touch images obtained by the input device 100. The processing system 110 may perform some or all of the blocks in process 300 in any suitable orders to facilitate the workflow 400.

It will be appreciated that the workflow depicted in **FIG. 4** is merely an example, and that the principles discussed herein may also be applicable to other situations-for example, including other types of devices, systems, and neural network configurations.

In **FIG. 4****,** the processing system 110 receives a touch image 402. For example, the processing system 110 may execute block 310 of process 300 to obtain the touch image 402. The touch image 402 captures a signal distribution determined by resulting signals received from the array of sensor electrodes 105 in the touch sensor 102 over a specific time interval. In this example, the touch image 402 indicates three contacts (e.g., 402a, 402b, and 402c) according to the signal distribution.

Based on the touch image 402, the processing system 110 may proceed to execute block 320 of process 300 to determine one or more segmentation masks (e.g., 404a, 404b, and 404c in 404) for the touch image 402. For instance, the processing system 110 may identify one or more first pixels within an area related to a respective contact (e.g., 402a) to establish the center of a corresponding segmentation mask (e.g., 404a). The one or more first pixels may consist of local maximum values, or values exceeding a predefined threshold (e.g., a detection threshold). Furthermore, the processing system 110 may determine second pixels in the neighborhood of the one or more first pixels as part of the corresponding segmentation mask (e.g., 404a). As such, the segmentation mask may encompass a subset of pixels within the touch image 402 corresponding to a respective contact (e.g., 402a). In this way, the processing system 110 determines segmentation masks 404a, 404b, and 404c for the contacts 402a, 402b, and 402c, respectively. It will be appreciated that other suitable techniques and algorithms may be utilized by the processing system 110 to compute the segmentation masks 404a, 404b, and 404c in 404.

At block 406, the processing system 110 isolates individual contacts based on the touch image 402 and the segmentation masks as depicted in 404. For example, the processing system 110 may generate an isolated contact image 410a by obtaining pixels corresponding to the contact 402a from the touch image 402 according to the segmentation mask 404a, and then generating additional pixels around the obtained pixels to construct the isolated contact image 410a. Similarly, the processing system 110 may generate isolated contact images 410b and 410c corresponding to the segmentation masks 404b and 404c.

Other suitable operations discussed in block 320 of process 300 may be utilized to generate the isolated contact images. For example, the processing system 110 may identify the contact 402a as an edge contact, while the contacts 402b and 402c are non-edge contacts. In this scenario, when constructing the isolated contact image 410b/410c, the processing system 110 may assign a zero value to the additional pixels surrounding the pixels obtained from the touch image 402 according to the segmentation mask 404b/404c. When constructing the isolated contact image 410a, the processing system 110 may assign varying values to the additional pixels surrounding the pixels obtained from the touch image 402 according to the segmentation mask 404a. For example, the processing system 110 may assign a negative value (or other specific value) to a subset of the additional pixels to indicate the presence of an edge relative to the contact 402a, while assigning a zero value to the remaining additional pixels, thereby indicating the presence and relative position of the edge.

In some examples, the size of a segmentation mask (or segment) may vary, while the classifier may use a fixed-dimensional input. To address this, after isolating the contacts, the processing system 100 may center each segment and position it within a fixed region of interest (ROI). This process ensures that the input to the classifier, such as the isolated contact images 410a, 410b, or 410c, conforms to the predefined dimension.

At block 412, the processing system 110 applies a trained neural network to classify the contacts in the respective isolated contact images. For example, the processing system 100 may utilize the trained neural network to process the isolated contact images 410a, 410b, and 410c in multiple instances (e.g., 414a, 414b, and 414c). The processing of the isolated contact images 410a, 410b, and 410c may occur sequentially, in parallel, or in combination. As depicted in block 412, the contact in the isolated contact image 410a is classified as "Palm," while the contacts in the isolated contact images 410b and 410c are classified as "Finger."

In some examples, a fully-connected neural network may be utilized to classify the isolated contact images. For example, when the isolated contact images are constructed with centered contacts, the processing system 110 may employ a fully-connected neural network to effectively and efficiently classify the contacts, as the fully-connected neural network has a simply architecture but is sensitive to the space-variant nature of the data.

In some instances, the processing system 110 may employ a convolutional neural network (CNN) to classify the contacts from the isolated contact images without centering the contacts or even from the touch images (e.g., containing multiple contacts), as CNN is spaceinvariant although it comes with a more complex architecture and requires more computational power.

In some variations, the processing system 110 may employ a recurrent neural network (RNN) to classify the contacts based on a current isolated contact image and a previous isolated contact image relevant to the same contact at different time intervals, for example, by tracking a particular contact over a time period. This approach enables the processing system 110 to leverage the previous classification result to enhance the accuracy of the current prediction (e.g., classification).

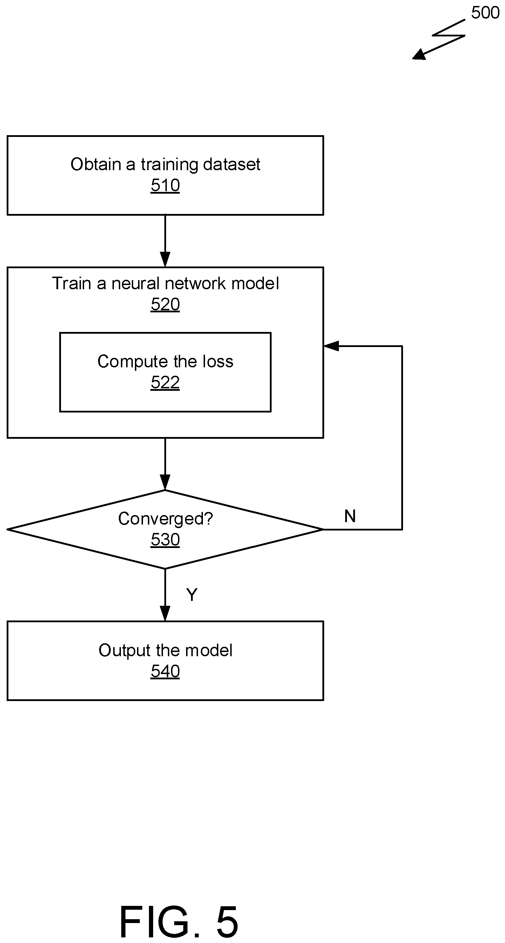

**FIG. 5** is a flowchart illustrating a training process 500, in accordance with certain embodiments. The training process 500 may be performed by a suitable computing platform, such as a server, a workstation, a personal computer, and/or the processing system 110 of the input device 100. The training process 500 uses a suitable training dataset in any suitable computational environment (e.g., on a cloud computing platform or a local environment). For example, the processing system 110 of the input device 100 may employ a neural network to process touches or contacts (e.g., touch images 310, isolated contacts 320, or other applicable data) in contact with or proximate to the touch sensor during the training or inference phase. The computing platform is referred to as a computing system hereinafter to demonstrate the performance of the example training process 500, in accordance with certain embodiments. Moreover, it will be appreciated that the computing system may perform some or all of the blocks in process 500 in any suitable order except where otherwise apparent.

At block 510, the computing system obtains a training dataset.

The training dataset may be obtained from a database with data collected from various users. For example, the data may be collected when the users employ various gestures while using a touchpad, such as swipe, flick, tap, and more. A swipe gesture involves moving one's finger or cursor across a touchscreen or touchpad in a continuous motion. Swiping is commonly used for scrolling through content, navigating between pages, or activating certain functions. A swipe gesture is most often performed using a finger, such as an index or middle finger. A swipe is the a common gesture that is intentionally performed in a touchpad to, for example, move the cursor to different parts of the display. A flick gesture typically involves quickly swiping and releasing a finger or cursor in a specific direction, usually with more force than a typical swipe. Flicking is commonly used, for example, for fast scrolling, navigating through long lists or pages, or dismissing elements on the screen. A tap gesture is typically performed by quickly touching and releasing a finger on a touchscreen or touchpad. Tapping is often used, for example, to select items, activate buttons, or open applications.

Suitable input devices (e.g., the input device 100) may be used to collect the user data. For example, an input device may obtain touch frames at a predefined frame rate (e.g., capacitive frames at a capacitive frame rate) from a sensor array (e.g., the array of sensor electrodes 105 within the input device 100). The collected touch frames may be stored, for example, in a database in memory. Additionally and/or alternatively, the database may include isolated contacts generated from the touch images. For example, the computing system may execute block 320 of process 300 to generate one or more isolated contact images from each touch image.

The computing system may obtain touch frames from the database to construct the training dataset. For instance, the training dataset may include a plurality of touch images, each containing one or more contacts. Alternatively, the computing system may construct the training dataset using the isolated contact images. In a further example, the computing system may generate additional data (e.g., additional touch images / isolated contact images) by augmenting the existing data from the database. This augmentation process may involve operations such as rotating, scaling, cropping, or other manipulations applied to the touch images / isolated contact images. For instance, a center contact (or a non-edge contact) may be transformed into an edge contact through augmentation. In another example, additional data points (e.g., isolated contact images) may be generated by applying up-down and/or left-right flips of the existing contact images to increase model robustness during training.

The training dataset may include annotated data, where contacts are classified according to predefined classifications, such as "Palm" and "Finger," as illustrated in FIG. 4. The annotations of the training data may be utilized as ground-truth information. The goal of the training process 500 is to train a neural network model to accurately predict the classification of the input contacts. Various suitable algorithms may be utilized to train the model, for example, by minimizing the divergence between the predictions and the ground-truth.

At block 520, the computing system trains a neural network model.

An epoch refers to one complete pass of the entire training dataset through a machine learning algorithm. During training, the training dataset may be divided into smaller batches to improve computational efficiency. In each epoch, the algorithm iterates through all the batches, updating the model's parameters (or weights) based on the calculated loss function and the chosen optimization algorithm (e.g., gradient descent). Multiple epochs may be performed to train a model effectively, allowing it to learn from the dataset and improve its performance over time.

For example, at each iteration, the computing system may compute a loss (in block 522) based on predictions on a respective batch of data. At block 530, the computing system may determine whether the model has converged, for example, based on the success rate of the predictions, completion of a predefined number of the iterations, or other suitable factors. Additionally and/or alternatively, the computing system may execute block 530 for each epoch. Once determining that the model has converged, the computing system may proceed to block 540 to output the model. If no, the computing system may repeat blocks 520, 522, 530 to continue the training until the model is converged.

At block 540, the output of the model may include information about the model architecture (e.g., layers, nodes, and connections therebetween) and a set of parameters (e.g., learnable weights) learnt from the training (e.g., process 500). The output of the trained model may be stored in any suitable form of structured data, such as comma-separated values (CSV), JavaScript Object Notation (JSON), eXtensible Markup Language (XML), database tables, and more.

Referring back to **FIG. 3****,** the processing system 110 may implement a classifier into block 330 based on the trained model output from process 500. For example, the classifier may include a neural network identical to the trained model output from process 500. In this regard, the processing system 110 may adopt the same model architecture and retrieve the set of parameters corresponding to the trained model to deploy the particular neural network as the classifier. Alternatively, the processing system 110 may implement a modified neural network based on the trained model. For example, a quantized model may be generated by quantizing the weights within the trained model to 8-bit. Alternatively and/or additionally, a smaller model may be generated by consolidating certain nodes within the trained model to reduce the size of the generated model. In other words, the classifier may utilize an appropriate neural network based on the trained model, considering various limiting factors such as computational capacity, processing speed, accuracy, and other relevant considerations.

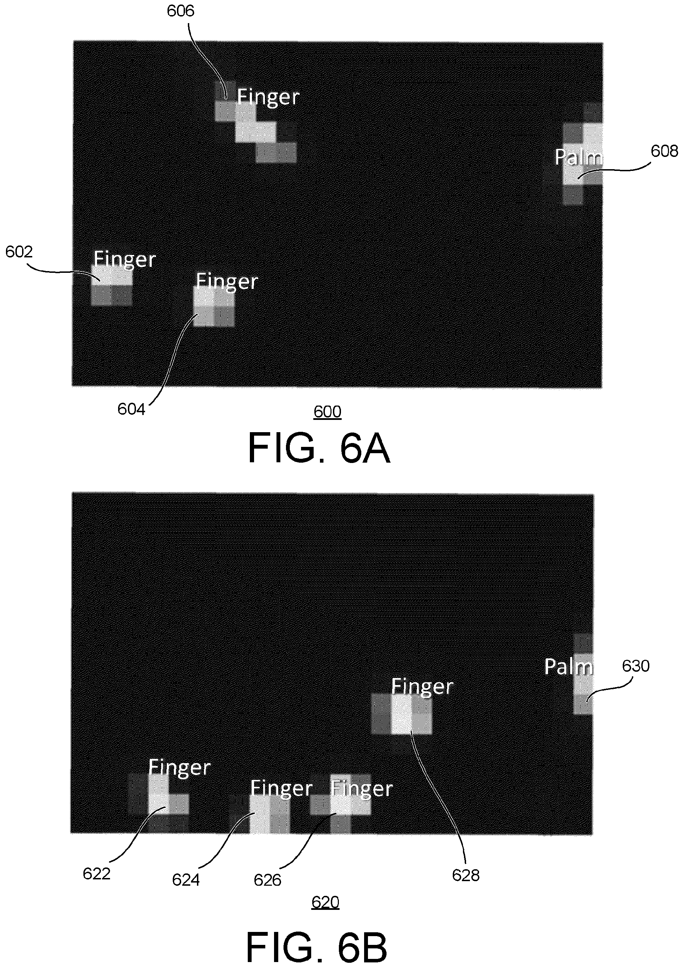

**FIGs. 6A** and **6B** are example classification results using a NN-based classifier. The NN-based classifier is applied during the execution of block 320 of process 300 to generate the classification results.

As shown in **FIG. 6A****,** a touch image 600 includes four contacts 602, 604, 606, and 608 with varying sizes, locations, and signal profiles. The classifier accurately classifies the contacts 602, 604, 606, and 608 as "Finger," "Finger," "Finger," and "Palm," respectively. In this example, edge contact 608 is accurately classified, despite it not being a complete contact signal.

In **FIG. 6B****,** a touch image 620 includes five contacts 622, 624, 626, 628, and 630 with varying sizes, locations, and signal profiles. The classifier accurately classifies the contacts 622, 624, 626, 628, and 630 as "Finger," "Finger," "Finger," "Finger," and "Palm," respectively. Similarly, edge contacts 624 and 630 are accurately classified. Moreover, **FIG. 6B** demonstrates that the NN-based classifier is capable of classifying contacts that are close to each other, such as contacts 624 and 626.

In an example embodiment, a neural network is trained for 100 epochs on a 25-user database collected on a laptop. The training dataset includes segment contacts (e.g., isolated contact images) generated through one or more operations within a pipeline executed by the processing system of the laptop. Some of the edge contacts within the training dataset are generated by randomly introducing edge regions in a contact window (e.g., corresponding to a segmentation mask) for a respective segment contact. While introducing the edge(s), at least three pixels remain above the detection threshold to ensure that sufficient relevant information is still present to classify the contact effectively. Pixels (e.g., in an isolated contact image) associated with the edge(s) are distinguished by an index (e.g., of a negative or other specific value), which is distinct from other background pixels (e.g., with zero-pixel values). Furthermore, additional segment contacts are generated by applying up-down and/or left-right flips of the existing contacts to increase model robustness during training.

During inference, the trained model is tested on, for example, a 10-user multitouch database where 8700 touch contacts are annotated as finger/thumb or palm. The results from the NN is compared with another rule-based accidental contact mitigation (ACM) algorithm using attributes of the contacts (e.g., various areas, dimensions, etc.). Compared with the rule-based ACM classifier, the NN-based classifier shows a significant improvement in classifying different types of contacts, particularly demonstrating enhanced improvement in handling edge contacts.

In some embodiments, limited by processing capacity, the processing system 110 of the input device 100 may be configured to process a subset of the isolated contacts using an NN-based classifier. To achieve this, the processing system 110 may determine, based on specific criteria, which isolated contacts to classify using the NN-based classifier. In further embodiments, the processing system 110 may deploy another classifier to handle the remaining isolated contacts. The another classifier may, for example, be a rule-based ACM classifier or other suitable classifiers.

For example, the processing system 110 within the input device 100 may prioritize contacts based on specific information of the contacts and subsequently applying a particular classifier to the contacts based on their priorities.

**FIG. 7** is a flowchart of determining priority of contacts, in accordance with certain embodiments. The flowchart 700 may be executed by the processing system 110 within the input device 100. The flowchart 700 may be implemented in suitable blocks in process 300, such as block 320 and / or block 330. In some instances, the processing system 110 may perform some or all of the blocks in flowchart 700 in any suitable order except where otherwise apparent.

At block 710, the processing system 110 receives one or more isolated contacts. For example, the processing system 110 may process one isolated contact at a time or a plurality of isolated contacts in a batch.

At block 720, the processing system 110 determines whether an isolated contact is an edge contact. As previously discussed, edge contacts benefit more from the use of the NN-based classifier. Therefore, if identified as an edge contact, the processing system 110 may assign a high priority to the respective isolated contact (in block 740).

At block 730, when the processing system 110 determines that the isolated contact is a non-edge contact, the processing system further determines whether the size of the isolated contact is within a predefined range. For example, medium size contacts are harder to classify comparing to very small or very large contacts, when classifying between finger contacts and palm contacts. Therefore, the processing system 110 may prioritize medium contacts over small or large contacts based on a predefined range. In other words, medium contacts (e.g., within the predefined range) may be assigned with high priority (in block 740), while other contacts (not within the redefined range) may be assigned with low priority (in block 750).

In some examples, after obtaining an isolated contact (e.g., by executing block 320 of process 300), the processing system 110 may execute workflow 700 to determine the priority of the respective isolated contact. Subsequently, based on the priority, the processing system 110 may decide on a suitable classifier to classify the respective isolated contact accordingly. The processing system 110 may then execute block 330 of process 300, employing the determined classifier to classify the respective isolated contact.

It should be noted that alternative methods / configurations may be utilized to determine priorities of the contacts. This could involve assigning higher priority to corner contacts over other edge contacts, applying multiple ranges (e.g., in block 730) based on overlapping intervals between different classifications, or considering other factors such as the maximum number of contacts to be processed for a touch frame, among others considerations.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (e.g., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein.

All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. An input device for classification of an input object, comprising:
a touch sensor comprising a plurality of sensor electrodes configured to obtain touch data; and
a processing system configured to:
receive touch data from resulting signals from the plurality of sensor electrodes;
generate a touch image based on the touch data;
generate one or more contact images based on the touch image, each contact image comprising one or more first pixels from the touch image and one or more second pixels with predefined values;
classify, using a neural network, a respective contact in each of the one or more contact images and generate corresponding classification results; and
identify, based on the classification results, one or more classified contacts in the touch image.

2. The input device of claim 1, wherein each contact image of the one or more contact images is associated with a segmentation corresponding to the one or more first pixels within the touch image.

3. The input device of claim 2, wherein at least one pixel of the one or more first pixels comprises one or more third pixels with signal intensity above a predefined threshold and one or more fourth pixels in the vicinity of the one or more third pixels.

4. The input device of claim 3, wherein the predefined threshold is a detection threshold corresponding to resulting signals received by the plurality of sensor electrodes.

5. The input device of claim 1, wherein the processing system is further configured to:
apply a segmentation mask to the touch image, the segmentation mask indicating the one or more first pixels corresponding to the contact within the touch image.

6. The input device of claim 5, wherein the processing system is further configured to:
obtain the one or more first pixels from the touch image according to the segmentation mask;
center the one or more first pixels in the respective contact image; and
generate the one or more second pixels with the predefined values.

7. The input device of claim 1, wherein a subset of the one or more second pixels is assigned with a first value indicating presence of one or more edges relative to the respective contact, and wherein remaining pixels of the one or more second pixels are assigned with a second value.

8. The input device of claim 1, wherein the one or more contact images have fixed dimensions.

9. The input device of claim 1, wherein the neural network is obtained from a model trained using a training dataset.

10. The input device of claim 9, wherein the training dataset comprises contact images collected from users and augmented contact images; or
wherein the neural network is obtained by quantizing weights in the trained model to 8-bit; or
wherein the neural network is a fully-connected network; or
wherein the neural network classifies a current contact image based on a current touch image and a previous touch image; or
wherein the processing system is further configured to determine, based on the one or more classified contacts in the touch image, a gesture by a user.

11. A method for classification of an input object using an input device, comprising:
receiving, from a plurality of sensor electrodes of the input device, touch data from resulting signals;
generating a touch image based on the touch data;
generating one or more contact images based on the touch image, each contact image comprising one or more first pixels from the touch image and one or more second pixels with predefined values;
classifying, using a neural network, a respective contact in each of the one or more contact images and generating corresponding classification results; and
identifying, based on the classification results, one or more classified contacts in the touch image.

12. The method according to claim 11, wherein each contact image of the one or more contact images is associated with a segmentation corresponding to the one or more first pixels within the touch image.

13. The method according to claim 12, wherein at least one pixel of the one or more first pixels comprises one or more third pixels with signal intensity above a predefined threshold and one or more fourth pixels in the vicinity of the one or more third pixels;
wherein, optionally, the predefined threshold is a detection threshold corresponding to resulting signals received by the plurality of sensor electrodes.

14. The method according to claim 11, further comprising:
applying a segmentation mask to the touch image, the segmentation mask indicating the one or more first pixels corresponding to the contact within the touch image.

15. A non-transitory computer-readable medium, having computer-executable instructions stored thereon for classification of an input object using an input device, wherein the computer-executable instructions, when executed, facilitate performance of the following:
receiving, from a plurality of sensor electrodes of the input device, touch data from resulting signals;
generating a touch image based on the touch data;
generating one or more contact images based on the touch image, each contact image comprising one or more first pixels from the touch image and one or more second pixels with predefined values;
classifying, using a neural network, a respective contact in each of the one or more contact images and generating corresponding classification results; and
identifying, based on the classification results, one or more classified contacts in the touch image.
